# EUROPÄISCHE PATENTSCHRIFT

(11) **EP 1 031 375 B1**
(45) Veröffentlichungstag und Bekanntmachung des Hinweises auf die Patenterteilung: **12.07.2006**
(21) Anmeldenummer: 00103012.1
(22) Anmeldetag: 15.02.2000
(51) Int. Cl.: B01J 19/00

(54) **Mikroreaktor**
Microreactor
Microréacteur

(30) Priorität: 24.02.1999 DE 29903296 U
(43) Veröffentlichungstag der Anmeldung: 30.08.2000
(73) Patentinhaber: CPC Cellular Process Chemistry Systems GmbH, 55130 Mainz (DE)
(72) Erfinder: Oberbeck, Sebastian, 65753 Greifenstein (DE); Schwalbe, Thomas Dr., 61118 Bad Vilbel (DE)
(74) Vertreter: Kompter, Hans-Michael

(56) Entgegenhaltungen:
- DE-A- 19 708 472
- DE-A- 19 746 583
- US-A- 5 250 263

## Beschreibung

Die Erfindung bezieht sich auf einen Mikroreaktor zur Durchführung chemischer Reaktionen, wobei die chemische Prozessführung in horizontalen Räumen stattfindet, die von zwei oder mehreren übereinander gestapelten Platten oder Schichten gebildet werden, wobei diese Platten oder Schichten integrierte Abdichtzonen aufweisen, die eine flüssigkeits- und gasdichte Verbindung zwischen jeweils zwei aufeinanderliegenden Schichten und nach außen herbeiführen, und wobei die Platten oder Schichten in eine Vorrichtung mit angepasster Größe, so eingepasst sind, dass die Abdichtzonen der Platten oder Schichten dichtend aufeinander gepresst werden.
Ein solcher Mikroreaktor stellt ein miniaturisiertes Reaktionssystem für die Verfahrenstechnik und die chemische Prozesstechnik dar. Ein Mikroreaktor der oberbegrifflichen Art ist zum Beispiel aus der EP 0 688 242 B1 bekannt. Dieser Mikroreaktor wird aus einer Vielzahl von aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um jeweils erwünschte chemische Reaktionen auszuführen. Es ist wenigstens ein durch das System hindurchführender Kanal enthalten, der mit dem Einlass und dem Auslass verbunden ist. Die einzelnen Plättchen sind fest miteinander verbunden, so dass der Mikroreaktor, einmal gebaut, nicht an veränderte Verhältnisse angepasst werden kann. Nach der Lehre dieses Dokuments müssen für spezielle Reaktionstypen bestimmte Mikroreaktoren konstruiert werden. Ein bestimmter Mikroreaktor kann dann nur für einige Einheitsoperationen eingesetzt werden.

In der DE 196 52 823 wird ein zusammensetzbares und zerstörungsfrei wieder demontierbares Mikroreaktorsystem vorgeschlagen, bei dem die einzelnen Schichten durch Polytetrafluorethylen-Spacer fixiert und abgedichtet werden. Die Nachteile dieses Systems beruhen darauf, dass die einzelne Schichten und Spacer sehr sorgfältig positioniert werden müssen und dass die Spacer Materialien nicht gegen alle in der chemischen Synthese einzusetzenden Reaktionsbedingungen inert sind. Zudem können die einzusetzenden Spacer zu Problemen bezüglich der Durchlässigkeit der einzelnen Kanäle und zu erhöhten Herstellungskosten führen.

Das US Patent US 5,250,263 zeigt einen aus übereinander gestapelten Platten gebildeten Apparat zur Vorbereitung von flüssige Probe für chemische Analyser.

In der DE 19 708 472 werden ein Herstellverfahren für aus übereinander gestapelten Platten gebildete Mikroreaktoren vorgeschlagen. Das verbinden der Platten erfolgt hiernach vorzugsweise durch Löten.

Der Erfindung liegt die Aufgabe zugrunde, ein Mikroreaktorsystem zu schaffen, das eine einfache Anpassung des Mikroreaktors an verschiedene Prozessbedingungen unter Vermeidung der Nachteile der bekannten Systeme ermöglicht. Der Mikroreaktor soll eine exakte Temperaturführung der Reaktionsprozesse und je nach Wunsch in unterschiedlichen Bereichen gezielte laminare oder turbulente Strömungen zu erzeugen. Der Mikroreaktor soll ferner preiswert herstellbar sein, um gegebenenfalls im Einwegsystem verwendet zu werden. Die unterschiedlichen Funktionsmodule (Wärmeaustauscher, Mischer = Reaktor, Verweilstrecken, Verdampfer, Destillations- und/oder Extraktionsvolumina) können unabhängig vom jeweils durchzuführenden Reaktionstyp standardisiert gefertigt werden. Durch die Wahl der Fluidführungsöffnungen können diese Standard-Funktionsmodule, je nach Bedarf beliebig kombiniert werden und lösbar oder unlösbar miteinander verbunden werden.
Es soll aber auch der Aufbau unterschiedlicher Anordnungen, Geometrien und/oder Größen des Reaktors möglich sein.

Die gestellte Aufgabe wird aufgrund der Merkmale des Anspruchs 1 gelöst und durch die weiteren Merkmale der Unteransprüche ausgestaltet und weiterentwickelt. Im einzelnen werden Funktionsmodule gebildet, die sich im Hinblick auf die durchzuführende chemische Prozessführung geeignet zusammenstellen lassen und miteinander verbunden werden. Die modulare Bauweise ermöglicht eine einfache Anpassung an die jeweils auftretenden Bedingungen auch wechselnder Art, indem einzelne Elemente des Mikroreaktors austauschbar sind, um den Erfordernissen der gewählten Reaktion zu genügen oder wenn sich die erhofften Ergebnisse nicht einstellen oder wenn Defekte auftreten.

Durch Austausch von Komponenten kann man die Fluidführung schließlich so dimensionieren, dass sich eine verbesserte Temperaturführung der Reaktionen einstellt, oder dass eine höhere Selektivität und eine verringerte Bildung unerwünschter Nebenreaktionsprodukte beobachtet wird, d. h. dass man das erwünschte Produkt mit weniger Verunreinigungen erhält.
Die Dimensionen und Formgebung des erfindungsgemäßen Mikroreaktors sind an sich unkritisch. Definitionsgemäß ist bei einem Mikroreaktor die Abmessung mindestens einer Komponente kleiner als 1 mm.

Die einzelnen Platten oder Schichten sind quadratisch oder rechteckig. Quadratische Platten sind im Hinblick auf ihre Positionierbarkeit besonders bevorzugt.

Von grundlegender Bedeutung für richtiges Funktionieren des Mikroreaktors ist die Flüssigkeits- und gasdichte Verbindung zwischen den einzelnen Modulen des Mikroreaktors. Zu diesem Zweck werden Oberflächenbereiche der Platten speziell bearbeitet, die Fluidkanäle werden geeignet geführt und die Anschlüsse so ausgeführt, dass beim Zusammenbau der Module ausreichende Sicherheit vor Leckagen gewährleistet wird. Die integrierten Abdichtzonen werden vorzugsweise so ausgestaltet, dass sie eine extrem glatte Oberfläche aufweisen. Besonders bevorzugt sind solche Abdichtzonen deren Rauigkeit kleiner als 1 µm ist. In einer weiteren bevorzugten Ausführungsfrom werden die Abdichtzonen so ausgeführt, dass eine erhabene, vorzugsweise scharfe Kante der einen Platte in die glatte Oberfläche einer zweiten Platte eingreift.

Während die verfahrenstechnischen Einzeloperationen in den einzelnen Funktionsmodulen vor sich gehen, sind diese durch vertikale Kanäle miteinander verbunden, um das Fluid von Stufe zu Stufe weiterzuverarbeiten. Die Funktionsmodule selbst enthalten horizontale Kanäle und Räume, die für die jeweilig vorgesehenen Prozessschritte zugeschnitten sind. Zwischen den Kanälen und den Räumen gibt es Trennstege, die aufgrund des auf den Stapel der Funktionsmodule ausgeübten Druckes dicht werden. Es ist somit festzustellen, dass für die Zu- und Abfuhr der Reaktanten und der Hilfsmedien vertikale Kanäle zuständig sind, während die Reaktionen selbst in sich horizontal erstreckenden Räumen stattfinden.

Der Stapel der Funktionsmodule wird von einem Gehäuse umschlossen, welches auch die fluidischen Anschlüsse für die zu verarbeitenden Medien sowie die Abfuhr des erwünschten Produktes enthält. Dieses Gehäuse selbst ist vorzugsweise als Spannvorrichtung ausgebildet, oder gesonderte Spannvorrichtungen sorgen dafür, dass es zur ausreichenden Flächenpressung zwischen den einzelnen Funktionsmodulen kommt, um deren Dichtigkeit zu gewährleisten. Das Gehäuse Anschlussstutzen auf, die auf zugeordnete Öffnungen zu den vertikalen Kanälen der Funktionsmodule gepresst werden, wobei die Kontaktflächen zwischen den Anschlussstutzen und den Öffnungen vorzugsweise kegelig oder kugelig sind, jedoch auch zylindrisch gestaltet sein können. Zur Einstellung des Drucks können federvorgespannte Druckplatten verwendet werden. Zum gleichen Zweck können Druckluftpolster oder dergleichen im unteren Teil der Vorrichtung verwendet werden.
Weiterhin kann Druck auf die einzelnen Platten oder Schichten ausgeübt werden aufgrund thermischer Ausdehnung, magnetischer, piezoelektrischer, hydraulischer, pneumatischer oder elektrostatischer Anziehung oder Abstossung oder aufgrund eines Shape Memory Effektes.

Als Material der Platten oder Schichten kommen Metall (Edelstahl), Glas, Keramik, Halbleitermaterial, insbesondere auf der Basis von Silizium, sowie Kunststoffe in Betracht. Die Auswahl dieser Werkstoffe oder von Kombinationen davon richtet sich nach dem vorgesehenen Verwendungszweck. Ganz besonders bevorzugt ist Edelstahl.

Bei der chemischen Prozessführung müssen diverse Parameter beachtet werden. Deshalb ist der Einbau von Sensoren in den Mikroreaktor vorgesehen, insbesondere zur Erfassung der Temperatur, des Drucks, gegebenenfalls der Strömungsgeschwindigkeit und des Volumenstroms. Das Gehäuse weist entsprechende Durchführungen für diese Sensoren auf, und wenn immer möglich, werden diese Sensoren außerhalb des Mikroreaktorsystems angeordnet. Teilweise sind aber Sensoren in den Funktionsmodulen unvermeidbar. Die Sensoren sind mit Regelkreisen verbunden, um den Betriebsablauf zu steuern und zu regeln. Die entsprechende Logik kann an dem Gehäuse angebaut sein oder sich außerhalb des Gehäuses befinden.

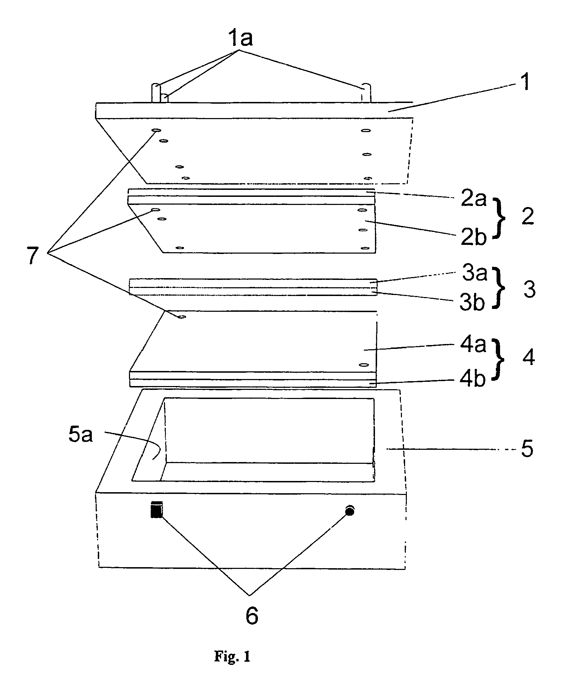

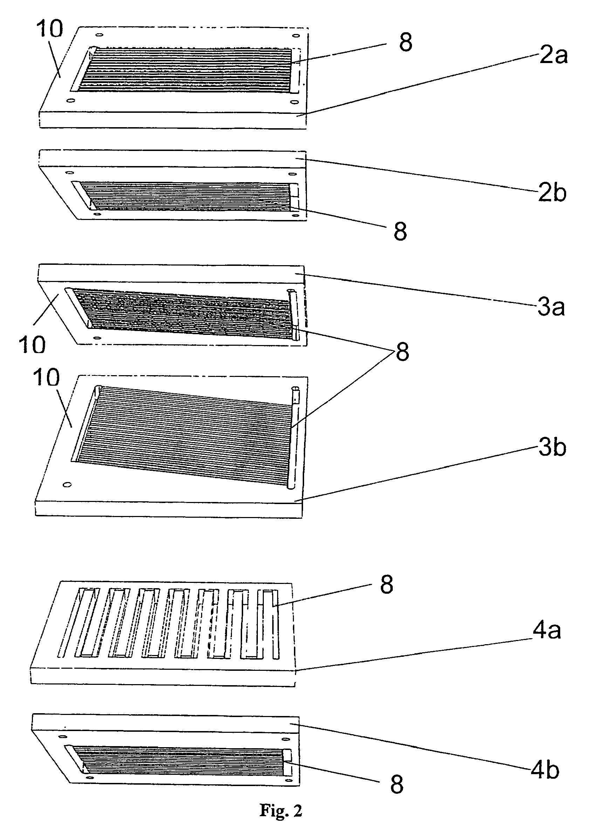

Die Erfindung wird anhand der Zeichnung beschrieben. Dabei zeigt: Fig. 1 einen Mikroreaktor in schematischer, auseinander gezogener Darstellung und Fig. 2 vergrößerte Einzelheiten des Mikroreaktors.

Zwischen einem Gehäusedeckel 1 und einem Gehäuse 5 sind eine Anzahl von Funktionsmodulen 2, 3 und 4 angeordnet, die durch den Zusammenbau unter Druck gehalten werden, um Abdichtflächen zwischen den Modulen zusammenzupressen. Jedes Funktionsmodul 2, 3 und 4 enthält eine Modulhälfte 2a, 2b bzw. 3a, 3b bzw. 4a, 4b, die jeweils rahmenartig gestaltet sind, um Abdichtflächen 10 darzubieten, die beim Aufeinanderpressen der Hälften abdichten. Im Deckel sind Fluidanschlüsse 1a angebracht, die sich in Fluidkanälen 7 durch die Randbereiche der Funktionsmodule fortsetzen. Von dort gibt es horizontale Kanäle zu Reaktionsräumen 8, die in der Regel ein Kanalsystem oder Labyrinthsystem beinhalten. Die Reaktionskanäle der Reaktionsräume 8 laufen im allgemeinen schräg oder quer zueinander.

Die aus zwei Hälften zusammengebauten Funktionsmodule zeigen an ihren Oberflächen jeweils Öffnungen der Kanäle 7, die in standardisierten Abständen angeordnet sind, um beim Stapelaufbau von Funktionsmodulen genau 10 zueinander zu fluchten. Diese Öffnungen sind mit Dichtstrukturen versehen, um fortlaufende Kanäle 7 abdichtend zu kuppeln. Diese abdichtenden Kupplungsausbildungen können als zylindrische Stutzen mit kegelförmigen oder sphärischen Abdichtflächen ausgebildet und genügend nachgiebig sein, damit die plattenförmigen Funktionsmodule mit ihrem gesamten Randbereich aufeinander liegen, um den Pressdruck auf die innenliegenden Abdichtflächen 10 zu übertragen.

Im dargestellten Ausführungsbeispiel sei angenommen, dass das Funktionsmodul 2 einen Wärmetauscher darstellt, der aus einer Wärmetauscherhälfte 2a für Kühl- und/oder Heizmedium und einer Wärmetauscherhälfte 2b für Reaktantenführung besteht. Das Funktionsmodul 3 sei ein Mischer aus einer Mischerhälfte 3a zur Führung eines Reaktionspartners A und einer Mischerhälfte 3b zur Führung eines Reaktionspartners B. Das Funktionsmodul 4 stellt eine Verweilstrecke dar, die aus einer Verweilstreckenhälfte 4a für Reaktionsprodukt und einer Verweilstreckenhälfte 4b für Kühl- und/oder Heizmedium besteht.

Das Gehäuse 5 weist einen Gehäusehohlraum 5a auf, dessen Größe zur Aufnahme der Funktionsmodule 2, 3 und 4 angepasst ist. Dabei kann unten im Gehäuse 5 noch eine Federdruckschicht angeordnet sein, die nicht dargestellt ist und aus Federn mit Druckplatte besteht. Alternativ kann auch ein flaches Druckkissen verwendet werden, mit welchem der notwendige Anpressdruck zwischen den Dichtflächen 10 erzeugt werden kann.

Im eingebauten Zustand wird der Deckel 1 fest am Gehäuse 5 gehalten, und hierzu können Schraubverbindungen oder Klammerpressen dienen, wenn es um eine lösbare Verbindung geht. Man kann auch Schweißen, Bonden, Kleben, Löten oder Nieten anwenden, wenn Gehäusedeckel 1, Gehäuse 5 und/oder die Funktionsmodule 2, 3 und 4 nur einmal verwendet werden sollen. Das Gehäuse 5 kann auch Durchführungen für Sensoren 6 umfassen, um gewisse Parameter der in den Reaktoren ablaufenden chemischen Prozesse zu erfassen. Als Sensoren kommen vor allem Sensoren für Temperatur, Druck, Strömungsgeschwindigkeit, Volumen- oder Massestrom sowie pH-Wert in Betracht.

Ein weiterer Gegenstand der Erfindung ist ein Prozess zur Herstellung eines erfindungsgemäßen Mikroreaktors zur Durchführung chemischer Reaktionen, welcher folgende Schritte umfasst:
(a) Herstellen einer Vielzahl von Platten oder Schichten, deren Oberflächen Mikro- und/oder Feinwerk-technisch so strukturiert sind, dass sie Abdichtzonen und - zusammen mit der Oberfläche einer weiteren Platte oder Schicht - horizontale Reaktionsräume aufweisen;
(b) Stapeln der einzelnen Platten oder Schichten in geeigneter Reihenfolge und Orientierung in einem passgenauen Gehäuse; und
(c) Anpressen des Gehäusedeckels, so dass die Abdichtzonen der einzelnen Platten oder Schichten dichtend aufeinander gepresst werden.

Die Strukturierung bei Schritt (a) kann durch Ätzen, Laser- und Wasserstrahlschneiden und -bohren, Stanzen und Prägen, Fräsen, Hobeln und Bohren, Spritzguss und Sintern sowie Funkerosiv und mit Kombinationen derselben erfolgen.

Vorzugsweise werden die Bleche der einzelnen Platten oder Schichten durch Ätzen, Laserstrahlschneiden und/oder -bohren hergestellt. Dabei werden die Außenkonturen und die Bohrungen vorzugsweise durch Laserstrahlschneiden bzw. -bohren hergestellt und die Kanalstrukturen vorzugsweise durch Ätzen erzeugt. Ausgehend von einem Entwurf wird beim Ätzen zuerst eine Maske erstellt, die entweder die Positiv- oder Negativdarstellung der Geometrie beinhaltet. Dann wird auf das Substrat, vorzugsweise ein Metallblech, ein lichtempfindlicher Lack aufgetragen, in der Regel eine wenige µm Dicke Polymethylmethacrylat (PMMA) Schicht, welcher mit Hilfe der Maske und Ultravioletter Strahlung belichtet wird. In den belichteten oder unbelichteten Bereichen (je nach Positiv oder Negativresist) wird mit einem organischen Lösungsmittel, vorzugsweise Aceton, der Lack entfernt. Das so belackte, belichtete und entwickelte Substrat wird in eine entsprechende Ätzlösung getaucht, in der die freiliegenden Flächen dem Ätzangriff solange ausgesetzt werden, bis eine gewünschte Ätztiefe erreicht ist.

Die Lagen müssen derart übereinander gestapelt sein, dass zum einen die Fluidführungen und Trennwände vollständig erhalten bleiben. Zum anderen muss eine völlig flüssigkeits- und gasdichte Verbindung zwischen den einzelnen Lagen erfolgen.

Liegen die Oberflächenrauheiten im Bereich 1µm oder darunter und ist die Oberfläche absolut frei von Kratzern, sauber und fettfrei, so ist es möglich ein gasdichtes Aufeinanderliegen der Bleche durch Ausübung eines gleichmäßigen mechanischen Druckes auf den Stapel zu erreichen. Grundlegend hierfür ist, das der verbleibende Restspalt kleiner als 1µm wird. Dies verursacht eine so hohen Strömungswiderstand zwischen den Platten, dass Fluide zwar geringfügig in den Spalt eintreten können aber keine Lecks darstellen, da keine Strömung, wie sie z.B. in Kapillaren vorkommt entstehen kann.

Der Werkstoff, aus dem die Funktionsmodule bestehen, richtet sich in erster Linie nach den zu verarbeitenden Stoffen und chemischen Prozessen. Allgemein kommen die für die Chemie tauglichen Werkstoffe Edelstahl, Glas, Keramik, Kunststoff und Halbleiterbaustoffe sowie Kombinationen dieser Werkstoffe in Betracht. Das gleiche gilt auch für das Gehäuse und den Gehäusedeckel.

Um sich wechselnden Erfordernissen anpassen zu können, gibtes auch unterschiedlich große Gehäuse mit Gehäusedeckel, um unterschiedliche Anzahlen von Funktionsmodulen aufnehmen zu können. Diese Auswahl aus möglichen Komponenten ermöglicht es gegebenenfalls auch, einzelne Komponenten auszutauschen, wenn deren Funktion als nicht optimal erkannt wird, oder wenn ein Fehler auftreten sollte.

Ein weiterer Gegenstand der Erfindung ist daher ein Bausatz zur Herstellung Mikroreaktors zur Durchführung chemischer Reaktionen welcher folgende Bauteile umfasst:
(a) einen Satz von mehreren Platten oder Schichten (2a, 2b, 3a, 3b, 4a, 4b), deren Oberflächen jeweils integrierte Abdichtzonen und - zusammen mit der Oberfläche einer weiteren Platte oder Schicht - horizontale Reaktionsräume aufweisen;
(b) ein oder mehrere Gehäuse, in der die einzelnen Platten oder Schichten passgenau und in unterschiedlichen, geeigneten Reihenfolgen gestapelt werden können; wobei das Gehäuse Vorrichtungen zum Anpressen der Platten oder Schichten aufweist, so dass die Abdichtzonen der einzelnen Platten oder Schichten durch ausreichende Flächenpressungdichtend aufeinander gepresst werden.
Aufgrund eines solchen Bausatzes ist der Anwender in der Lage den Mikroreaktor seinen Bedürfnissen entsprechend anzupassen. Extrem exotherme Reaktionen lassen sich zum Beispiel durch den Einsatz mehrerer hintereinandergeschalteter Wärmeaustauschermodule besser beherrschen. Dagegen können langsame Reaktionen zum Beispiel durch den Einbau weiterer Funktionsmodule mit Verweil- und/oder Heizzonen optimiert werden.

Insgesamt wird mit der Erfindung ein modular aufgebautes, miniaturisiertes Reaktionssystem zur Verfügung gestellt, das die Integration verschiedener, für die Prozessführung bedeutsamer Funktionen ermöglicht. Zu diesen Funktionen werden die Zuführung der Reaktanten, deren präprozessuale Wärmebehandlung, die Zusammenführung der Reaktanten unter kontrollierten thermischen Bedingungen, eine intermediäre thermische Behandlung sowie eine postprozessuale Verweilzeit und die Abfuhr des Reaktionsproduktes in geeignete Vorratsbehälter verstanden.

Weiterhin Gegenstand der Erfindung ist daher ein Verfahren zur Durchführung chemischer Reaktionen, wobei ein oder mehrere chemische Reaktanden in gasförmiger und/oder fluider Form in den von zwei oder mehreren übereinander gestapelten Platten oder Schichten eines erfindungsgemäßen Mikroreaktors gebildeten horizontalen Räumen gegebenenfalls gemischt und zur Reaktion gebracht werden.

Der Begriff "fluide Form" umfasst sowohl Reaktanten, die selbst in einem füssigem Aggregatszustand vorkommen, als auch Reaktanten, die in einem Gemisch mit einem fluiden Verdünnungsmittel eingesetzt werden. In einer besonders bevozugten Ausführungsform werden mindestens zwei Reaktanten in Gegenwart von mindestens einem Verdünnungsmittel in einem erfindungsgemäßen Mikroreaktor zur Reaktion gebracht. Bevorzugte Verdünnungsmittel sind gegebenenfalls halogenierte aliphatische oder aromatische Kohlenwasserstoffe wie zum Beispiel Hexan, Cyclohexan, Dichlormethan, Tetrachlormethan, Benzol, Toluol oder Chlorbenzol; oder Ether wie zum Beispiel Diethylether, *tert-*Butylmethylether, Dioxan oder Tetrahydrofuran; Ketone oder Amide wie zum Beispiel Aceton, Methylethylketon, Dimethylformamid oder N-Methylpyrrolidon; oder Alkohole wie zum Beispiel Methanol, Ethanol, Propanol, Isopropanol oder Butanol; oder Acetonitril oder Wasser oder Gemische aus diesen Verdünnungsmitteln.

Um das Verständnis der vorliegenden Erfindung zu erleichtern werden die nachfolgenden illustrativen Beispiele für mögliche Reaktionstypen dargelegt. Die vorliegende Erfindung ist nicht beschränkt auf diese spezifischen Ausführungsformen, sondern umfasst den vollen Umfang der Patentansprüche.

Beispiele für erfindungsgemäße Reaktionen sind Umsetzungen von elektrophilen Reaktanten mit nucleophilen Reaktanten, wie zum Beispiel die Reaktion eines Amins mit einem Carbonsäurechlorid unter Ausbildung eines Carbonsäureamids; oder Umsetzungen eines Diens mit einem Dienophil unter Bildung eines Cyclohexens.

## Patentansprüche

1. Mikroreaktor zur Durchführung chemischer Reaktionen, wobei die chemische Prozessführung in horizontalen Räumen stattfindet, die von zwei oder mehreren übereinander gestapelten quadratischen oder Platten oder Schichten gebildet werden, wobei diese Platten oder Schichten integrierte Abdichtzonen aufweisen, die eine flüssigkeits- und gasdichte Verbindung zwischen jeweils zwei aufeinanderliegenden Schichten und nach außen herbeiführen; die Platten oder Schichten von einen Gehäuse mit angepasster Größe, so umschlossen werden, dass die Abdichtzonen der Platten oder Schichten durch ausreichende Flächenpressung dichtend aufeinander gepresst werden.

2. Mikroreaktor nach Anspruch 1, **dadurch gekennzeichnet, dass** die Funktionsmodule lösbar miteinander verbunden sind.

3. Mikroreaktor nach Anspruch 1 oder 2, **dadurch gekennzeichnet, dass**
(a) die Funktionsmodule Abdichtzonen (10) enthalten, um eine flüssigkeits- und gasdichte Verbindung zwischen den einzelnen Funktionsmodulen und nach außen herbeiführen, und unterschiedliche Funktionsmodule (2, 3, 4) zu jeweils erwünschten Reaktionssystemen ausgewählt und zusammengestellt werden können;
(b) ein Gehäusesatz (1, 5), der jeweils eine passende Gehäusegröße bietet, um das jeweils zusammengestellte Reaktionssystem aufzunehmen und die Abdichtzonen (10) der Funktionsmodule dichtend aufeinander zupressen.

4. Mikroreaktor nach einem der Ansprüche 1 bis 3, **dadurch gekennzeichnet dass** er folgende Vorrichtungen umfasst:
- eine oder mehrere Zuführungen von Reaktanten,
- Vorrichtungen zu deren präprozessualer Wärmebehandlung,
- Zusammenführung der Reaktanten unter kontrollierten thermischen Bedingungen,
- eine Vorrichtung zur intermediären thermischen Behandlung,
- eine Vorrichtung zur postprozessualen Verweilzeit, und
- eine Vorrichtung zur Abfuhr des oder der Reaktionsprodukte.

5. Mikroreaktor nach einem der Ansprüche 1 bis 4, **dadurch gekennzeichnet, dass** die Abdichtzonen so ausgeführt sind, dass eine erhabene Kante der einen Platte in die glatte Oberfläche einer zweiten Platte eingreift.

6. Mikroreaktor nach einem der Ansprüche 1 bis 5, **dadurch gekennzeichnet, dass** die Abdicht-Kontaktflächen ineinander greifende Kegel-, Kugel- oder Zylinderformen umfassen.

7. Mikroreaktor nach einem der Ansprüche 1 bis 6, **dadurch gekennzeichnet, dass** Federn zum Einbau in das Gehäuse (1, 5) vorgesehen sind, um einen vorbestimmten Pressdruck zwischen den Funktionsmodulen aufrechtzuerhalten.

8. Mikroreaktor nach einem der Ansprüche 1 bis 7, **dadurch gekennzeichnet, dass** jedes Gehäuse (1,5) jeweils einen Deckel (1) und ein Gehäuseunterteil (5) umfasst, die durch Schrauben oder Klammerpressen lösbar miteinander verbunden sind.

9. Mikroreaktor nach einem der Ansprüche 1 bis 8, **dadurch gekennzeichnet, dass** das Gehäuse (1, 5) Durchführungen für elektrische Leitungen sowie an seiner Außenseite zugehörige elektrische Anschlüsse aufweist und/oder Signalleitungen von Sensoren (6) umfasst, die zur Erfassung von Prozessparametern, wie Temperatur, Druck, Strömungsgeschwindigkeit, Volumen- oder Massestrom, pH-Wert, entweder in der Gehäusewandung oder in einzelnen Funktionsmodulen untergebracht sind.

10. Mikroreaktor nach Anspruch 9, **dadurch gekennzeichnet, dass** Regelkreise vorgesehen sind, die aufgrund der gemessenen Parameter den Materialfluss in den fluidischen Anschlüssen sowie die Energiezufuhr und - abfuhr hinsichtlich der Funktionsmodule regeln.

11. Mikroreaktor nach einem der Ansprüche 1 bis 10, **dadurch gekennzeichnet, dass** die Funktionsmodule (2, 3, 4) jeweils zwei Platten oder Schichten (2a, 2b; 3a, 3b; 4a, 4b) enthalten, auf deren Oberfläche horizontale Kanäle und Reaktionsräume durch Verfahren der Mikro- und/oder Feinwerktechnik hergestellt sind.

12. Mikroreaktor nach einem der Ansprüche 1 bis 11, **dadurch gekennzeichnet, dass** als integrierte Funktionsmodule Mischer, Wärmetauscher, Verweilstrecken, Filter, Verdampfer, Destillationskolonnen oder Extraktionskolonnen vorgesehen sind.

13. Prozess zur Herstellung eines Mikroreaktors zur Durchführung chemischer Reaktionen nach einem der Ansprüche 1 bis 12, welcher folgende Schritte umfasst:
(a) Herstellen einer Vielzahl von Platten oder Schichten (2a, 2b, 3a, 3b, 4a, 4b), deren Oberflächen Mikro- und/oder Feinwerk-technisch so bearbeitet werden, dass sie Abdichtzonen und - zusammen mit der Oberfläche einer weiteren Platte oder Schicht - horizontale Reaktionsräume aufweisen;
(b) Stapeln der einzelnen Platten oder Schichten in geeigneter Reihenfolge und Orientierung in einem passgenauen Gehäuse; und
(c) Anpressen des Gehäusedeckels, so dass die Abdichtzonen der einzelnen Platten oder Schichten dichtend aufeinander gepresst werden.

14. Bausatz zur Herstellung Mikroreaktors zur Durchführung chemischer Reaktionen nach einem der Ansprüche 1 bis 12, welcher folgende Bauteile umfasst:
(a) einen Satz von mehreren Platten oder Schichten (2a, 2b, 3a, 3b, 4a, 4b), deren Oberflächen jeweils integrierte Abdichtzonen und - zusammen mit der Oberfläche einer weiteren Platte oder Schicht - horizontale Reaktionsräume aufweisen;
(b) ein oder mehrere Gehäuse, in der die einzelnen Platten oder Schichten passgenau und in unterschiedlichen, geeigneten Reihenfolgen gestapelt werden können; wobei das Gehäuse Vorrichtungen zum Anpressen der Platten oder Schichten aufweist, so dass die Abdichtzonen der einzelnen Platten oder Schichten durch ausreichende Flächenpressung dichtend aufeinander gepresst werden.

15. Verfahren zur Durchführung chemischer Reaktionen, **dadurch gekennzeichnet, dass** ein oder mehrere chemische Reaktanden in gasförmiger und/oder fluider Form in den von zwei oder mehreren übereinander gestapelten Platten oder Schichten eines Mikroreaktors nach einem der Ansprüche 1 bis 12 gebildeten horizontalen Räumen gegebenenfalls gemischt und zur Reaktion gebracht werden.

## Claims

1. Microreactor for carrying out chemical reactions, where the chemical process control takes place in horizontal spaces formed by two or more square or rectangular plates or layers stacked one on top of the other, these plates or layers having integrated sealing zones which effect a liquid- and gas-tight connection between each two layers lying one on top of the other and to the outside; the plates or layers are surrounded by a housing of matched size so that the sealing zones of the plates or layers are pressed against one another in a sealing manner by sufficient surface pressure.

2. Microreactor according to Claim 1, **characterized in that** the function modules are connected to one another in a detachable manner.

3. Microreactor according to Claim 1 or 2, **characterized in that**
(a) the function modules contain sealing zones (10) in order to effect a liquid- and gas-tight connection between the individual function modules and to the outside, and different function modules (2, 3, 4) can be selected and assembled to give reaction systems desired in each case;
(b) a housing set (1, 5) which offers an appropriate housing size in each case in order to accommodate the reaction system assembled in each case and to press the sealing zones (10) of the function modules against one another in a sealing manner.

4. Microreactor according to one of Claims 1 to 3, **characterized in that** it comprises the following devices:
- one or more reactant feeds,
- devices for pre-process heat treatment thereof,
- combination of the reactants under controlled thermal conditions,
- a device for intermediate thermal treatment,
- a device for the post-process residence time, and
- a device for discharge of the reaction product(s).

5. Microreactor according to one of Claims 1 to 4, **characterized in that** the sealing zones are designed in such a way that a raised edge of one plate engages with the smooth surface of a second plate.

6. Microreactor according to one of Claims 1 to 5, **characterized in that** the sealing contact surfaces comprise conical, spherical or cylindrical shapes which engage with one another.

7. Microreactor according to one of Claims 1 to 6, **characterized in that** springs for installation in the housing (1, 5) are provided in order to maintain a pre-determined pressure between the function modules.

8. Microreactor according to one of Claims 1 to 7, **characterized in that** each housing (1, 5) comprises a lid (1) and a housing lower part (5), which are connected to one another in a detachable manner by screws or clamp presses.

9. Microreactor according to one of Claims 1 to 8, **characterized in that** the housing (1, 5) has through-holes for electric leads and, on its outside, associated electric contacts and/or includes signal leads from sensors (6) which are accommodated either in the housing wall or in individual function modules for recording process parameters, such as temperature, pressure, flow rate, volume or mass flow, pH.

10. Microreactor according to Claim 9, **characterized in that** control loops are provided for controlling the material flow in the fluid connections and the input and output of energy into and from the function modules on the basis of the measured parameters.

11. Microreactor according to one of Claims 1 to 10, **characterized in that** the function modules (2, 3, 4) each comprise two plates or layers (2a, 2b; 3a, 3b; 4a, 4b), on the surface of which horizontal channels and reaction spaces have been produced by micro-engineering and/or precision engineering methods.

12. Microreactor according to one of Claims 1 to 11, **characterized in that** mixers, heat exchangers, residence zones, filters, evaporators, distillation columns or extraction columns are provided as integrated function modules.

13. Process for the production of a microreactor for carrying out chemical reactions according to one of Claims 1 to 12 which comprises the following steps:
(a) production of a multiplicity of plates or layers (2a, 2b, 3a, 3b, 4a, 4b) whose surfaces are micro-engineered and/or precision engineered in such a way that they have sealing zones and - together with the surface of a further plate or layer - horizontal reaction spaces;
(b) stacking of the individual plates or layers in a suitable sequence and orientation in a housing with precise fit; and
(c) pressing of the housing lid so that the sealing zones of the individual plates or layers are pressed against one another in a sealing manner.

14. Kit for the production of a microreactor for carrying out chemical reactions according to one of Claims 1 to 12 which comprises the following components:
(a) a set of a plurality of plates or layers (2a, 2b, 3a, 3b, 4a, 4b) whose surfaces each have integrated sealing zones and - together with the surface of a further plate or layer - horizontal reaction spaces;
(b) one or more housings, in which the individual plates or layers can be stacked with precise fit and in different, suitable sequences; where the housing has devices for exerting pressure on the plates or layers so that the sealing zones of the individual plates or layers are pressed against one another in a sealing manner by sufficient surface pressure.

15. Process for carrying out chemical reactions, **characterized in that** one or more chemical reactants in gas form and/or fluid form are optionally mixed in the horizontal spaces formed by two or more plates or layers of a microreactor according to one of Claims 1 to 12 stacked one on top of the other and are brought to reaction.

## Revendications

1. Microréacteur pour effectuer des réactions chimiques, dans lequel la conduite des processus chimiques se fait dans des espaces horizontaux, qui sont formés par deux ou plusieurs plaques ou couches carrées ou rectangulaires empilées les unes sur les autres, dans lequel ces plaques ou couches présentent des zones d'étanchéité intégrées, qui assurent un assemblage étanche aux liquides et aux gaz entre deux couches respectivement superposées et vers l'extérieur, et les plaques ou couches sont entourées par une enceinte de grandeur adaptée de telle façon que les zones d'étanchéité des plaques ou des couches soient pressées de façon étanche les unes sur les autres par une pression de surface suffisante.

2. Microréacteur selon la revendication 1, **caractérisé en ce que** les modules fonctionnels sont assemblés les uns aux autres de façon séparable.

3. Microréacteur selon la revendication 1 ou 2, **caractérisé en ce que**
(a) les modules fonctionnels comportent des zones d'étanchéité (10), pour assurer un assemblage étanche aux liquides et aux gaz entre les modules fonctionnels individuels et vers l'extérieur, et différents modules fonctionnels (2, 3, 4) peuvent être sélectionnés et assemblés en systèmes de réaction respectivement souhaités ;
(b) un ensemble d'enceintes (1, 5), qui offre chaque fois une grandeur d'enceinte adaptée, pour loger respectivement le système de réaction assemblé et presser de façon étanche l'une contre l'autre les zones d'étanchéité (10) des modules fonctionnels.

4. Microréacteur selon l'une quelconque des revendications 1 à 3, **caractérisé en ce qu'**il comprend les dispositifs suivants :
- une ou plusieurs arrivées de réactifs,
- des dispositifs pour leur traitement thermique avant les processus,
- l'assemblage des réactifs dans des conditions thermiques contrôlées,
- un dispositif pour le traitement thermique intermédiaire,
- un dispositif pour un temps de séjour après les processus, et
- un dispositif pour l'évacuation du ou des produits de réaction.

5. Microréacteur selon l'une quelconque des revendications 1 à 4, **caractérisé en ce que** les zones d'étanchéité sont réalisées de telle manière qu'une arête surélevée d'une première plaque s'engage dans la surface lisse d'une deuxième plaque.

6. Microréacteur selon l'une quelconque des revendications 1 à 5, **caractérisé en ce que** les faces de contact d'étanchéité comprennent des formes coniques, sphériques ou cylindriques s'engageant les unes dans les autres.

7. Microréacteur selon l'une quelconque des revendications 1 à 6, **caractérisé en ce qu'**il est prévu des ressorts à monter dans l'enceinte (1, 5), pour maintenir une pression déterminée entre les modules fonctionnels.

8. Microréacteur selon l'une quelconque des revendications 1 à 7, **caractérisé en ce que** chaque enceinte (1, 5) comporte chaque fois un couvercle (1) et une partie d'enceinte inférieure (5), qui sont assemblés l'un à l'autre de façon séparable au moyen de vis ou de pinces de serrage.

9. Microréacteur selon l'une quelconque des revendications 1 à 8, **caractérisé en ce que** l'enceinte (1, 5) présente des passages pour des lignes électriques ainsi que des raccords électriques montés sur sa face arrière, et/ou comprend des lignes électriques de capteurs (6), qui sont installés soit dans la paroi de l'enceinte soit dans des modules fonctionnels individuels pour détecter des paramètres des processus, comme la température, la pression, la vitesse d'écoulement, le débit en volume ou en masse, la valeur de pH.

10. Microréacteur selon la revendication 9, **caractérisé en ce qu'**il est prévu des circuits de régulation qui régulent, sur la base des paramètres mesurés, le flux de matière dans les raccords de fluide ainsi que l'apport et l'évacuation d'énergie en ce qui concerne les modules fonctionnels.

11. Microréacteur selon l'une quelconque des revendications 1 à 10, **caractérisé en ce que** les modules fonctionnels (2, 3, 4) comprennent chaque fois deux plaques ou couches (2a, 2b ; 3a, 3b ; 4a, 4b) sur la surface desquelles des canaux et des espaces de réaction horizontaux sont produits par des procédés de mécanique de précision ou de micromécanique.

12. Microréacteur selon l'une quelconque des revendications 1 à 11, **caractérisé en ce que** l'on prévoit comme modules fonctionnels intégrés des mélangeurs, des échangeurs de chaleur, des zones de séjour, des filtres, des évaporateurs, des colonnes de distillation ou des colonnes d'extraction.

13. Procédé de fabrication d'un microréacteur pour effectuer des réactions chimiques selon l'une quelconque des revendications 1 à 12, qui comprend les étapes suivantes :
(a) fabriquer une pluralité de plaques ou couches (2a, 2b, 3a, 3b, 4a, 4b), dont les surfaces sont usinées par la micromécanique et/ou la mécanique de précision, de telle façon qu'elles présentent des zones d'étanchéité et - en coopération avec la surface d'une autre plaque ou couche - des espaces de réaction horizontaux ;
(b) empiler les plaques ou couches individuelles selon un ordre et une orientation appropriés dans une enceinte ajustée avec précision ; et
(c) presser le couvercle de l'enceinte, de telle façon que les zones d'étanchéité des plaques ou couches individuelles soient pressées de façon étanche les unes sur les autres.

14. Ensemble de construction pour la fabrication d'un microréacteur pour effectuer des réactions chimiques selon l'une quelconque des revendications 1 à 12, qui comprend les pièces suivantes :
(a) un ensemble de plusieurs plaques ou couches (2a, 2b, 3a, 3b, 4a, 4b), dont les surfaces présentent respectivement des zones d'étanchéité intégrées et - en coopération avec la surface d'une autre plaque ou couche - des espaces de réaction horizontaux ;
(b) une ou plusieurs enceintes, où les plaques ou couches individuelles peuvent être empilées en s'ajustant avec précision et selon des ordres différents appropriés ; dans lequel l'enceinte comprend des dispositifs pour presser les plaques ou couches de telle façon que les zones d'étanchéité des plaques ou couches individuelles soient pressées les unes sur les autres de façon étanche par une pression de surface suffisante.

15. Procédé pour effectuer des réactions chimiques, **caractérisé en ce qu'**un ou plusieurs réactifs chimiquée sous forme gazeuse et/ou fluide sont éventuellement mélangés dans les espaces horizontaux formés par deux plaques ou couches ou plus empilées les unes sur les autres d'un microréacteur selon l'une quelconque des revendications 1 à 12, et sont amenés à réagir.
